Europäisches Patentamt

European Patent Office

Office européen des brevets

(19)

(11) Publication number: **0 159 177 B1**

## EUROPEAN PATENT SPECIFICATION

(12)

(45) Date of publication of patent specification: **06.11.91**    (51) Int. Cl.⁵: **G11B  17/10**

(21) Application number: **85302504.7**

(22) Date of filing: **09.04.85**

(54) Disc separating and feeding apparatus for disc copying machine.

(30) Priority: **07.04.84 JP 51287/84 U**

(43) Date of publication of application:
**23.10.85 Bulletin  85/43**

(45) Publication of the grant of the patent:
**06.11.91 Bulletin  91/45**

(84) Designated Contracting States:
**AT BE CH DE FR GB IT LI LU NL SE**

(56) References cited:
**EP-A- 0 094 240**      **US-A- 2 386 166**
**US-A- 2 523 257**      **US-A- 3 843 964**
**US-A- 4 020 504**      **US-A- 4 047 230**

**PATENT ABSTRACTS OF JAPAN, vol. 8, no.
165 (P-291)[1602], 31st July 1984; & JP-A-59
60 777 (TOPPAN INSATSU K.K.) 06-04-1984**

(73) Proprietor: **Kabushiki Kaisha Graphico
11-13, Iwamoto-cho 1-chome, Chiyoda-ku
Tokyo(JP)**

(72) Inventor: **Seki, Noriyuki
c/o Kabushiki Kaisha Graphico 11-13,
Iwamoto-cho
1-chome, Chiyoda-ku, Tokyo(JP)**

(74) Representative: **Rees, David Christopher et al
Kilburn & Strode 30 John Street
London WC1N 2DD(GB)**

## Description

The present invention relates to an automatic magnetic disc separating and feeding apparatus for a magnetic disc copying machine, for example a copying machine which is adapted to be loaded with the magnetic disc, to read and record on the disc, or only to copy the disc according to a command from a computer connected thereto, and then to have the disc removed therefrom.

An apparatus for feeding a magnetic disc (hereinafter referred to as a "disc") for a disc copying machine is conventionally adapted to push out the lowermost one of stacked discs in order towards the copying machine (see e.g. EP-A-0094240). However, this action causes the envelope containing the lowermost disc to rub against that of the disc above which frequently causes the envelope of the lowermost disc to be caught by the flap of the envelope of the upper disc, resulting in many problems occurring in the disc feeding operation.

Also, the machanism for pushing out the disc to the copying machine is generally arranged to carry out the operation by inserting a pawl into a spindle hole provided in the disc or the outer edge of the envelope. This not only leads to the damage of the envelope but can render the disc unserviceable.

Accordingly, it is an object of the present invention to provide an automatic disc separating and feeding apparatus for a disc copying machine which is capable of effectively preventing damage to the disc and/or to its envelope.

US Patent No. 4047230 describes a machine for transferring blank magnetic sheets for recording. The top most blank is removed from a stack by a suction arm and conveyed to transfer rollers and then to a recording station, where it receives a magnetic imprint from a master.

US Patent No. 2386166 discloses a disc transfer mechanism for phonograph records in which blank discs are transferred to a pressing station by means of a suction head.

It is a further object of the present invention to provide a disc separating and feeding apparatus which can pick up a disc positively and transfer it accurately to a copying location without any risk of damage to the disc.

According to the invention, there is provided a disc separating and feeding apparatus for a disc copying machine comprising: a support member arranged to support a stack of discs; a feeding device arranged to feed a disc to an operation station; transfer means, including a suction mechanism, arranged to the uppermost disc from the stack by suction; and a drive mechanism to move the removed disc to the feeding device, characterised in that the transfer means consists of a disc sucking and sliding device which includes a stationary plate formed with a plurality of through-holes and a sliding plate formed with a plurality of through-holes, the sliding plate being arranged to overlap and to be intimately in contact with a lower surface portion of the stationary plate so that the through-holes of the stationary plate and those of the sliding plate selectively overlap one another to form air vents and thus allow for a variable application of suction therethrough to the uppermost disc one the stack.

Thus, generally, an automatic disc separating and feeding apparatus for a disc copying machine according to the present invention is constructed to suck upwardly the uppermost one of a stack of discs to separate the uppermost disc from the stack and to moving the disc without applying to the disc any force that might cause rubbing or friction between the discs or their envelopes, to transfer it to a transport device such as a belt conveyer or the like.

Preferably, the apparatus includes a lifting device arranged to lift the support member to maintain the uppermost disc at a predetermined position. The lifting device may include a winding device, a wire connected between the winding device and the support member, and a position sensor.

Preferably, the suction mechanism comprises a reduced pressure source, with which the co-operating through-holes of the stationary plate (7) and the sliding plate (8) are in communication. Preferably, the drive mechanism includes a pin which passes through a slot in the stationary late, which has one end fixed to the sliding plate and the other end fixed to a recriprocating device.

The invention may be carried into practice in various ways and one embodiment will now be described by way of example with reference to the accompanying drawings in which

FIGURE 1 is a partial vertical sectional side elevation showing a disc copying machine in which an embodiment of an automatic disc separating and feeding apparatus according to the present invention is incorporated;

FIGURE 2 is a plan view of the disc copying machine shown in FIGURE 1; and

FIGURES 3A and 3B each are bottom plan views of a sliding plate which shows the relationship in movement between a stationary plate and the sliding plate.

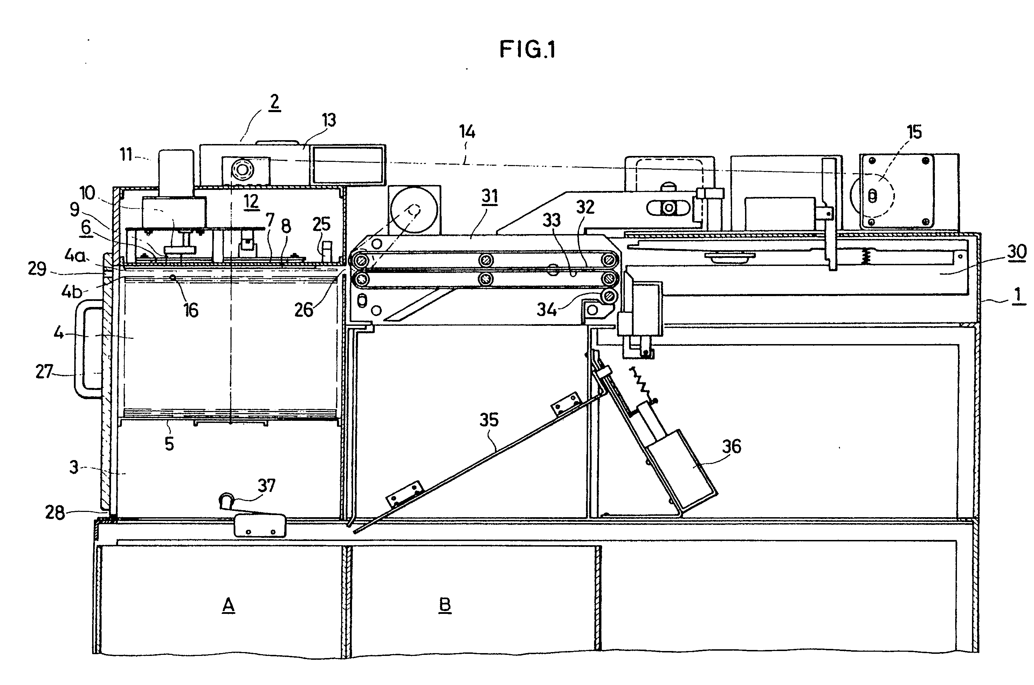

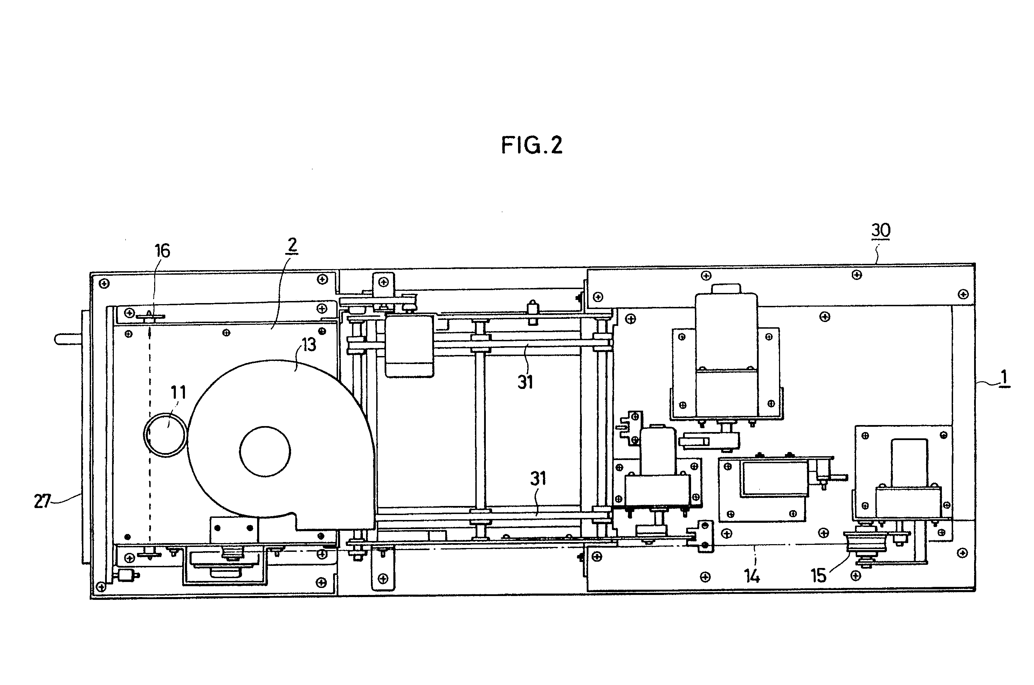

Referring to FIGURES 1 and 2, reference numeral 1 designates a disc copying machine, which includes an automatic disc separating and feeding apparatus generally designated by reference numeral 2. The apparatus 2 includes a disc receiving chamber 3 for receiving discs 4 therein, a lifting device having a supporting plate 5, and a device 6 for carrying out the suction and sliding of each disc 4 which comprises a perforated stationary plate 7 and a perforated sliding plate 8. The sliding plate 8 has a pin 9 whose lower end is fixedly embedded therein so that it extends through the stationary plate 7 and has its upper end connected to a sliding drive mechanism 10. The apparatus 2 of the illustrated embodiment also includes a motor 11, a negative pressure chamber 12 and a blower 13 such as a sirocco fan or the like which serves to generate negative pressure in the chamber 12.

The discs 4 stacked on the supporting plate 5 are positionally controlled to allow the uppermost disc 4b to be constantly at a predeterminded position. In the illustrated embodiment, the lifting device comprises a lifting wire 14 connected to the supporting plate 5, a winding device 15 for winding up the lifting wire 14 and an optical sensor 16 for carrying out the on-off control of the winding device 15. Reference numeral 37 designates a limit switch for stopping the lowering of the supporting plate 5. The lifting device is adapted to keep the uppermost sidc 4b at a position directly beneath the sliding plate 8 and spaced from it by a distance of about 5-8mm. The uppermost disc 4b can be sucked onto the lower surface of the sucking and sliding plate 8 so that it takes up the position indicated by reference numeral 4a in FIGURE 1 when the negative pressure chamber 12 is under negative pressure.

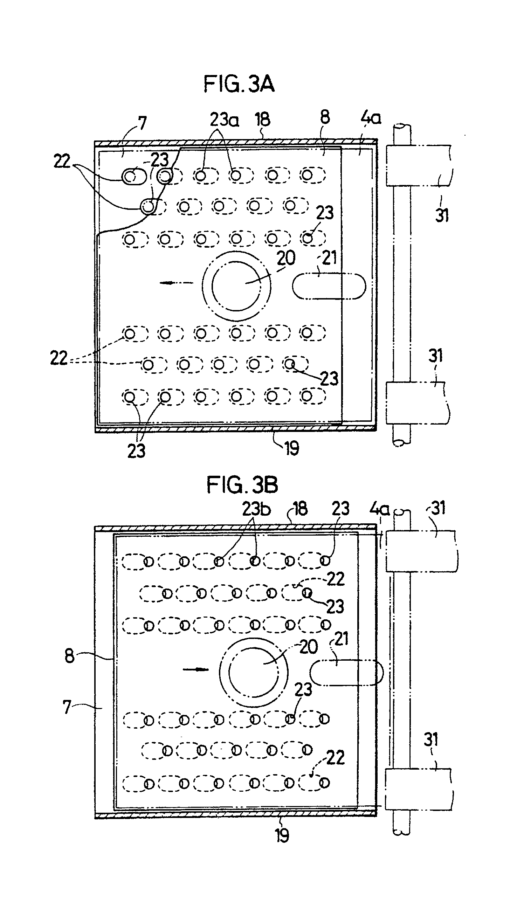

The construction of the stationary plate 7 and sliding plate 8 of the disc sucking and sliding device 6 and the relationship in movement between both plates are shown in FIGURES 3A and 3B.

The stationary plate 7 is arranged between side walls 18 and 19 of the apparatus 2 to serve as a partition plate and is provided with a plurality of through-holes 22 in two side portions between which a central hole 20 and a head hole 21 of a disc 4 would be located.

The sliding plate 8 is supported below the stationary plate 7 in intimate contact with the plate 7 and is connected to the sliding drive mechanism 10. The sliding plate 8 is provided with a plurality of through-holes 23 at positions corresponding to the through-holes 22 of the stationary plate 7, through-holes 23 are larger than the through-holes 22 and elongated in the direction of movement of the sliding plate 8. When the stationary plate 7 is at a suction position (the position shown in FIGURE 3A), the through-holes 22 and we are aligned with one another to form air vents 23a to allow a large suction force to be applied therethrough to the uppermost disc 4a, to suck the disc. When the sliding plate 8 is ready to transfer the sucked disc 4a, the air vents 23a are constricted as indicated by 23b to weaken the suction force (as shown in FIGURE 3B).

In FIGURE 1, reference numeral 27 designates a door plate, and 28 and 29 each indicate an air suction port.

In the illustrated embodiment, the sliding plate 8 is adapted to be slided by a rectilinear reciprocating motion mechanism such as a cam, a groove crank or the like.

The apparatus 2 further includes a sensor 25 for sensing the sucked disc 4a and a slit 26 adjacent the sucked disc 4a, 2.5-3mm in height i.e. a size sufficient to allow only one disc to pass.
In use, the uppermost disc 4b located in a suction area of the apparatus is sucked up onto the lower surface of the sliding plate 8 so that it is separated upwards from the stacked discs 4. Thus, the uppermost disc can be smoothly separated without any harmful external force such as friction being applied thereto, and is ready for the subsequent feeding operation.

The suction of the disc 4b onto the sliding plate 8 actuates the optical sensor 16 to drive the winding device 15, so that the uppermost disc of the stack may be kept at a predetermined position.

Then, when any suitable discriminating device (not shown) confirms that there is no disc in the disc driving device (indicated 30) and that a transport and discharge device 31 is being driven, the sliding drive mechanism 10 is actuated to move the sliding plate 8 to the position shown in FIGURE 3B. The discriminating device is not included in the scope of the present invention and for the sake of brevity will not be discussed herein.

This causes the sucked disc 4a to be put through the slit 26 and between belts 32 and 33 of the transport and discharge device 31. At this time, the suction force is substantially weakened since the through-holes 22,23 are no longer co-incident and the disc 4a is smoothly transferred to the transport and discharge device 31, so that it may be automatically loaded into the disc driving device 30 and subjected to the required operation such as copying or the like. During this operation, the transport and discharge device 31 tilts so that when the disc is ejected from the driving device 30 after the operation, the end of the disc is caught between the belt 33 and a discharge roller 34 and is then dropped onto a distribution device 35. The distribution device is driven through a solenoid 36 actuated by a signal fed from the computer to drop the disc selectively into one of two receptacles A and B.

The automatic disc separating and feeding apparatus of the illustrated embodiment is adapted to carry out the operation described above repeatedly.

As can be seen from the foregoing, the apparatus of the present invention utilizes suction due to negative pressure to accomplish positively and safely the separation of a disc, thereby effectively preventing the disc and/or its envolope from being damaged. Also, the apparatus of the present invention performs the automatic loading of the disc to the driving device smoothly and without any harmful external force being applied to the disc, because the transfer of the disc to the transport device is carried out when the suction force is automatically substantially weakened.

## Claims

1. A disc separating and feeding apparatus (2) for a disc copying machine (1) comprising: a support member (5) arranged to support a stack of discs (4); a feeding device (31) arranged to feed a disc (4a) to an operation station (30); transfer means (6), including a suction mechanism, arranged to remove the uppermost disc from the stack by suction; and a drive mechanism (9,10,11) to move the removed disc (4a) to the feeding device (31), characterised in that the transfer means consist of a disc sucking and sliding device which includes a stationary plate (7) formed with a plurality of through-holes (22) and a sliding plate (8) formed with a plurality of through-holes (23), the sliding plate (8) being arranged to overlap and to be intimately in contact with a lower surface portion of the stationary plate (7) so that the through-holes of the stationary plate (7) and those of the sliding plate (8) selectively overlap one another to form air vents and thus allow for a variable application of suction therethrough to the uppermost disc (4b) on the stack.

2. Apparatus as claimed in Claim 1 characterised by a lifting device (14,15,16) arranged to lift the support member (5) to maintain the uppermost disc at a predetermined position.

3. Apparatus as claimed in Claim 2 characterised in that the lifting device includes a winding device (15), a wire (14) connected between the winding device (15) and the support member (5), and a position sensor (16).

4. Apparatus as claimed in any preceding Claim characterised in that the suction mechanism comprises a reduced pressure source (12) with which the cooperating through-holes (22,23) of the stationary plate (7) and the sliding plate (8) are in communication.

5. Apparatus as claimed in Claim 4 characterised in that the drive mechanism includes a pin (9) through a slot in the stationary plate, which has one end fixed to the sliding plate (8) and the other end fixed to a reciprocating device (10).

## Revendications

1. Appareil à séparer les disques et à les introduire (2) dans une machine à copier les disques (1) qui comprend : un élément de support (5) disposé pour supporter une pile de disques (4); un dispositif d'alimentation (31) disposé pour introduire un disque (4a) à un poste de travail (30); un moyen de transfert (6) comprenant un mécanisme d'aspiration disposé pour reprendre par aspiration le disque supérieur de la pile; et un mécanisme d'entraînement (9, 10, 11) pour déplacer le disque enlevé (4a) vers le dispositif d'alimentation (31), caractérisé en ce que le moyen de transfert est constitué d'un dispositif d'aspiration et de déplacement du disque qui comprend une plaque fixe (7) comportant plusieurs trous de part en part (22) et une plaque coulissante (8) comportant plusieurs trous de part en part (23), la plaque coulissante (8) étant disposée de manière à recouvrir et être en contact intime avec une partie de la surface inférieure de la plaque fixe (7), si bien que les trous de part en part de la plaque fixe (7) et ceux de la plaque coulissante (8) se recouvrent sélectivement les uns les autres de manière à former des passages pour l'air, ce qui permet une application variable de l'aspiration à travers ceux-ci sur le disque supérieur (4b) de la pile.

2. Appareil selon la revendication 1, caractérisé par un dispositif de soulèvement (14, 15, 16) disposé de manière à soulever l'élément de support (5) afin de maintenir le disque supérieur dans une position prédéterminée.

3. Appareil selon la revendication 2, caractérisé en ce que le dispositif de soulèvement comprend un dispositif d'enroulement (15), un fil (14) connecté entre le dispositif d'enroulement (15) et l'élément de support (5), et un détecteur de position (16).

4. Appareil selon l'une quelconque des revendications précédentes, caractérisé en ce que le mécanisme d'aspiration comprend une source à pression réduite( 12) avec laquelle sont en communication les trous de part en part coopérants (22, 23) de la plaque fixe (7) et de la plaque.coulissante( 8).

5. Appareil selon la revendication 4, caractérisé en ce que le mécanisme d'entraînement comprend une broche (9) à travers une fente dans la plaque fixe, qui a une extrémité fixée à la plaque coulissante (8) et l'autre extrémité fixée au dispositif de va-et-vient (10).

befestigt ist.

## Patentansprüche

1. Plattentrennungs- und -speisungsgerät (2) für ein Plattenkopiergerät (1) umfassend ein Supportelement (5) zum Abstützen eines Plattenstapels (4), eine Zuführeinrichtung (31) zum Zuführen einer Platte (4a) zu einer Betriebsstation (30), Transportmittel (6) mit einem Ansaugmechanismus zum Entfernen der obersten Platte vom Stapel durch Ansaugen und einen Antriebsmechanismus (9,10,11) zum Bewegen der entfernten Platte (4a) zur Zuführeinrichtung (31), dadurch gekennzeichnet, daß die Transportmittel aus einer Einrichtung zum Ansaugen und Gleiten einer Platte bestehen, welche eine mit einer Vielzahl von Durchbrechungen (22) ausgebildete stationäre Platte (7) und eine mit einer Vielzahl von Durchbrechungen (23) ausgebildete Gleitplatte (8) umfaßt, wobei die Gleitplatte (8) derart angeordnet ist, daß sie einen unteren Oberflächenbereich der stationären Platte (7) überlappt und mit diesem in Kontakt steht, so daß die Durchbrechungen der stationären Platte (7) und der Gleitplatte (8) selektiv einander zur Ausbildung von Entlüftungslöchern überlappen und dadurch eine variable Anwendung des Ansaugens der obersten Platte (4b) des Stapels ermöglichen.

2. Gerät nach Anspruch 1, dadurch gekennzeichnet, daß eine Hebeeinrichtung (14,15,16) zum Anheben des Supportelementes (5) vorgesehen ist, um die oberste Platte in einer vorbestimmten Position zu halten.

3. Gerät nach Anspruch 2, dadurch gekennzeichnet, daß die Hebeeinrichtung eine Winde (15), einen zwischen der Winde (15) und dem Supportelement (5) verbundenen Draht (14) und einen Positionssensor (16) umfaßt.

4. Gerät nach einem der vorangehenden Ansprüche, dadurch gekennzeichnet, daß der Ansaugmechanismus eine Unterdruckquelle (12) umfaßt, mit welcher die zusammenwirkenden Durchbrechungen (22,23) der stationären Platte (7) und der Gleitplatte (8) in Verbindung stehen.

5. Gerät nach Anspruch 4, dadurch gekennzeichnet, daß der Antriebsmechanismus einen einen Schlitz in der stationären Platte durchdringenden Zapfen (9) aufweist, dessen eines Ende an der Gleitplatte (8) und dessen anderes Ende an einer hin- und hergehenden Einrichtung (10)

# FIG.1

EP 0 159 177 B1

FIG.2

EP 0 159 177 B1

## FIG.3A

## FIG.3B